# EUROPÄISCHE PATENTANMELDUNG

(11) **EP 1 961 693 A2**
(43) Veröffentlichungstag der Anmeldung: **27.08.2008**
(21) Anmeldenummer: 08101811.1
(22) Anmeldetag: 20.02.2008
(51) Int. Cl.: B66F 9/06, B60D 1/145, B62D 63/06

(54) **System zum Transportieren von Gegenständen**

(30) Priorität: 20.02.2007 DE 102007008691
(71) Anmelder: Behr, Uwe, 87544 Blaichach (DE); Weinig, Franz-Josef, 89312 Günzburg (DE)
(72) Erfinder: Weinig, Franz-Josef, 89312, Günzburg (DE)
(74) Vertreter: Hutzelmann, Gerhard

(57) **Zusammenfassung**

System zum Transportieren von Gegenständen, insbesondere von Paletten oder dergleichen, wobei das System aus einem oder mehreren Transportwagen aufgebaut ist und diese zur Aufnahme der Gegenstände vorgesehen sind.

## Beschreibung

Die Erfindung bezieht sich auf ein System zum Transportieren von Gegenständen, insbesondere von Paletten oder dergleichen.

Vor allem in Fabriken werden oftmals Gabelstapler oder dergleichen eingesetzt um Paletten zwischen verschiedenen Einsatzorten zu transportieren.

Dabei besteht jedoch oftmals das Problem, daß der Stapler-Verkehr immer mehr zunimmt und es dadurch oft zu Logistikproblemen, Verzögerungen und auch immer wieder Behinderungen und Unfällen kommt.

Der Erfindung liegt deswegen die Aufgabe zugrunde, ein Transportsystem vorzuschlagen, mit dem die vorgenannten Nachteile überwunden werden.

Diese Aufgabe wird erfindungsgemäß dadurch gelöst, daß das System aus einem oder mehreren Transportwagen aufgebaut ist und diese zur Aufnahme der Gegenstände vorgesehen sind.

Hierdurch wird unnötiger und Ressourcen vergeudender Staplerverkehr vermieden.

Dabei hat es sich als erfindungsgemäß erwiesen, wenn die Transportwagen mit starren Deichseln aneinander gekoppelt sind.

Durch die Kopplung der einzelnen Transportwagen mit starren Deichseln wird das Spurverhalten hintereinander gekoppelter Transportwagen bestimmt und beeinflusst, so daß diese wenigstens annähernd spurtreu hintereinander herlaufen.

Gemäß einer weiteren Ausgestaltung der Erfindung ist es auch sehr vorteilhaft, wenn die Deichsel im jeweils nächsten Wagen wenigstens in einer Ebene drehbar gelagert ist.

Dadurch wird nochmals das Spurverhalten verbessert und eine noch bessere Spurtreue erreicht.

Erfindungsgemäß ist es auch sehr vorteilhaft, wenn die Deichsel in zwei Ebenen drehbar gelagert ist.

Ebenfalls sehr vorteilhaft ist es, wenn die Deichsel in drei Ebenen drehbar gelagert ist.

Durch die mehrfach drehbare Lagerung können auch Übergänge zu Steigungen, Gefällen und auch seitliche Neigungen ausgeglichen werden.

Eine weitere erfindungsgemäß sehr vorteilhafte Ausgestaltung der Erfindung liegt auch dann vor, wenn die Transportwagen jeweils zwei starre Räder aufweisen, die auf einer zumindest gedachten Achse angeordnet sind.

Auf diesen Rädern kann der Wagen rollen.

Es hat sich auch als äußerst vorteilhaft erwiesen, wenn die Transportwagen einen selbsttragenden Rahmen aufweisen.

Durch den selbsttragenden Rahmen sind die Wagen sehr stabil.

Sehr vorteilhaft ist es erfindungsgemäß auch, wenn die Transportwagen wenigstens zwei Füße aufweisen.

Diese Füße nehmen das Gewicht des Wagens und auch der zu tragenden Last auf.

Dabei hat es sich als äußerst vorteilhaft erwiesen, wenn an den unteren Enden der Füße Räder vorgesehen sind.

Auf diesen mit Rädern versehenen Füßen kann der Wagen fahren.

Eine weitere sehr vorteilhafte Ausgestaltung der Erfindung liegt auch dann vor, wenn die Transportwagen vier Füße aufweisen.

Einerseits können die vier Füße zur besseren und leichteren Aufnahme der zu transportierenden Gegenstände dienen. Zudem wird ein Kippen des Wagens im abgekoppelten Zustand verhindert.

Eine weitere sehr vorteilhafte Ausgestaltung der Erfindung liegt auch darin, daß die Radachse mittig zwischen den beiden zumindest gedachten Endpunkten der Deichsel angeordnet ist.

Sehr vorteilhaft ist es auch, wenn die Deichsel zur Aufnahme von Kippkräften ausgebildet ist.

Dadurch wird ein Kippen der Wagen verhindert.

Es hat sich erfindungsgemäß auch als äußerst vorteilhaft erwiesen, wenn die Deichseln am oberen Ende der Wagen angeordnet sind.

Damit lassen sich Kippkräfte sehr gut weiterleiten und kompensieren.

Sehr vorteilhaft ist es erfindungsgemäß auch, wenn die Füße eine so große Länge aufweisen, daß der selbsttragende Rahmen und die daran angebrachte Deichsel in Überkopfhöhe angeordnet sind.

Hierdurch wird die Möglichkeit geschaffen, zwischen aufeinanderfolgenden Wagen gefahrlos und ohne Stolperstelle hindurchgehen zu können. Zudem wird neben einer seitlichen Auslademöglichkeit eine in Fahrtrichtung gelegene Auslademöglichkeit geschaffen.

Eine ebenfalls sehr vorteilhafte Weiterbildung der Erfindung liegt auch dann vor, wenn die Transportwagen eine Hubeinrichtung für die zu transportierenden Gegenstände bzw. Paletten aufweisen.

Mit einer Hubeinrichtung können die Gegenstände bzw. Paletten in den Transportwagen eingeführt und dann auf einfache Art und Weise zumindest soweit angehoben werden, daß diese den Boden nicht mehr berühren.

Es hat sich dabei als sehr vorteilhaft erwiesen, wenn die Hubeinrichtung winkelförmige Aufnahmen aufweist, die zur Aufnahme der Gegenstände vorgesehen sind.

Durch Aufnahmen lassen sich die Gegenstände sicher befestigen.

Zudem ist es sehr vorteilhaft, wenn die Aufnahmen im Bereich der Füße der Wagen vorgesehen sind.

Ebenfalls sehr vorteilhaft ist es erfindungsgemäß, wenn die Aufnahmen in der Höhe verschiebbar ausgebildet sind.

Damit lassen sich die Gegenstände sehr leicht mit den Aufnahmen anheben.

Es hat sich als sehr vorteilhaft erwiesen, wenn die Hubeinrichtung einen elektrisch, hydraulischen oder pneumatischen Antrieb aufweist.

Hiermit wird die Bedienung sehr stark vereinfacht und automatisiert.

Es hat sich erfindungsgemäß als sehr vorteilhaft erwiesen, wenn jeder Aufnahme ein separater Antrieb zugeordnet ist.

Dadurch lässt sich der Hebevorgang sehr genau steuern.

Ebenfalls sehr vorteilhaft ist es, wenn die Aufnahmen miteinander gekoppelt sind.

Damit wird der Hebevorgang der einzelnen Aufnahmen aufeinander abgestimmt. Die Kopplung kann mechanisch und/oder elektrisch, pneumatisch, hydraulisch od. dgl. erfolgen.

Gemäß einer weiteren Fortbildung der Erfindung ist es auch sehr vorteilhaft, wenn die Aufnahmen über ein Seilzug-/Kettensystem miteinander gekoppelt sind.

Dies ist eine einfache aber dennoch sehr effektive und robuste Form der Aneinanderkopplung der Aufnahmen.

Eine ebenfalls sehr vorteilhafte Weiterbildung der Erfindung liegt auch dann vor, wenn die Hubeinrichtung mit Energie aus einzelnen, jeweils einem Wagen zugeordneten Energiespeichern oder zentral über das gesamte System versorgt wird.

Damit ist sichergestellt, daß für die Hubeinrichtungen genügend Antriebsenergie zur Verfügung steht.

Gemäß einer weiteren Ausgestaltung der Erfindung ist es sehr vorteilhaft, wenn die Gegenstände jeweils auf einem Fahrgestell gelagert werden.

Dadurch können die Gegenstände sehr leicht in die Wagen hineingebracht werden.

Erfindungsgemäß hat es sich auch als äußerst vorteilhaft erwiesen, wenn die Kupplung zur Kopplung der Wagen derart stabil ausgebildet ist, daß diese die auftretenden Kräfte aufzunehmen vermag.

Damit wird sichergestellt, daß das aus mehrern Wagen gebildete System zwar beweglich aber dennoch stabil ist.

Dabei hat es sich als sehr vorteilhaft herausgestellt, wenn die Kupplung für jede Bewegungsebene jeweils eine separte Drehachse aufweist.

Durch die separate Lagerung für jede Drehachse kann diese sehr stabil ausgebildet werden, so daß die auftretenden Kräfte aufgenommen werden können.

Erfindungsgemäß ist es auch sehr vorteilhaft, wenn die Kupplung lösbar ausgebildet ist.

Hierdurch können die Wagen individuell aneinandergekoppelt werden.

Dabei hat es sich als äußerst vorteilhaft erwiesen, wenn die Kupplung an einer Drehachse lösbar ausgebildet ist.

Damit lässt sich der Kopplungsvorgang sehr einfach gestalten und trotzdem eine gute Kraftaufnahme gewährleisten.

Eine weitere sehr vorteilhafte Ausgestaltung der Erfindung liegt auch dann vor, wenn ein Zugfahrzeug für das System vorgesehen ist.

Das Zugfahrzeug komplettiert das System und sorgt für den nötigen Vortrieb.

Dabei hat es sich als sehr vorteilhaft erwiesen, wenn die Energieversorgung der einzelnen Wagen vom Zugfahrzeug aus erfolgt.

Dadurch muss nicht dafür gesorgt werden, daß die einzelnen Wagen immer nachgeladen werden. Dies erfolgt zentral.

Im folgenden wird die Erfindung anhand eines Ausführungsbeispiels veranschaulicht.

Dabei zeigen:
- Fig. 1: ein Seitenansicht eines erfindungsgemäßen System mit mehreren hintereinander angeordneten Wagen,
- Fig. 2: eine Draufsicht desselben Systems,

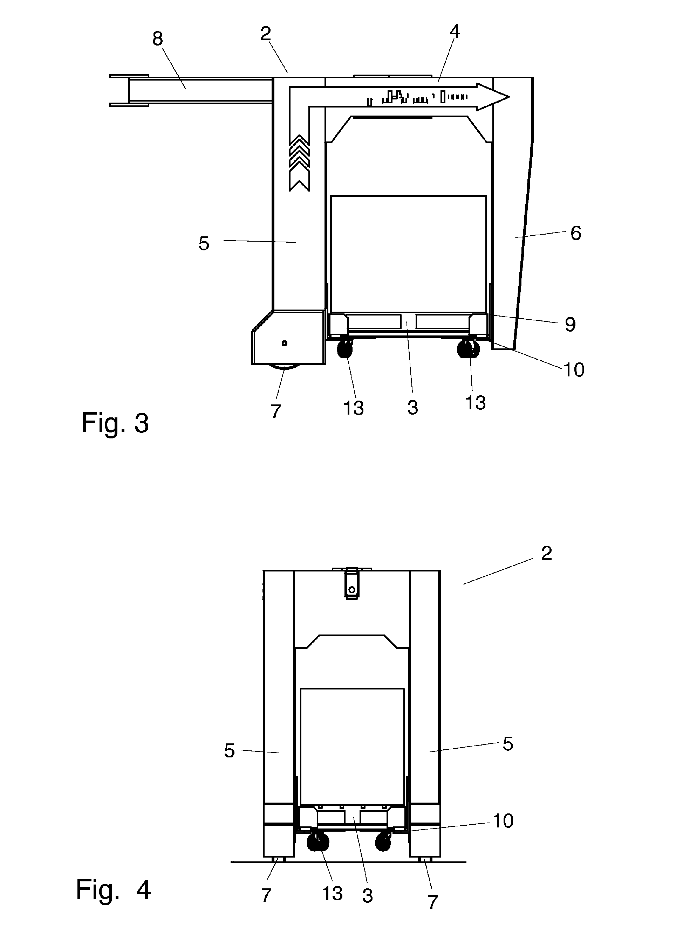

- Fig. 3: eine Längsseitenansicht eines einzelnen Wagens,
- Fig. 4: eine Schmalseitenansicht desselben Wagens,

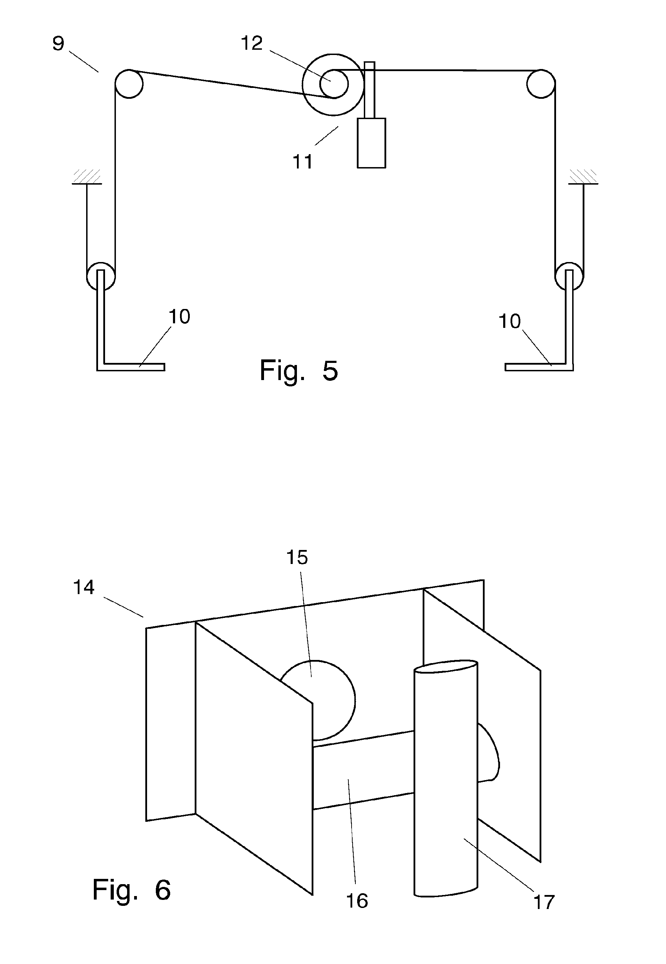

- Fig. 5: eine schematische Darstellung einer Hubeinrichtung für einen Wagen, und
- Fig. 6: eine schematische Darstellung einer Kupplung.

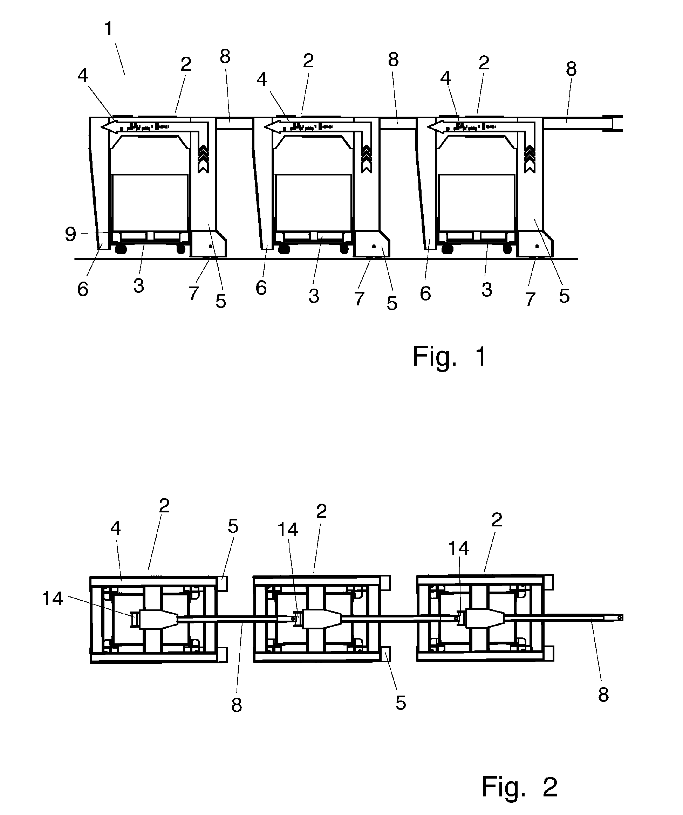

Mit 1 ist in Fig. 1 ein aus mehreren Wagen 2 zusammengekoppeltes System zum Transportieren von Gegenständen bezeichnet. In den hier dargestellten Beispielen werden auf Paletten 3 gepackte Gegenstände transportiert.

Jeder Wagen ist im wesentlichen aus einem als Dach ausgebildeten Tragrahmen 4 und zwei daran angebrachten, nach unten ragenden Tragfüßen 5 und zwei ebenfalls nach unten ragenden Hilfsfüßen 6 gebildet.

Die Tragfüße 5 sind ebenso wie die Hilfsfüße 6 nebeneinander angeordnet. Die Tragfüße 5 in Bewegungsrichtung vorne und die Hilfsfüße 6 in Bewegungsrichtung hinten.

Am unteren Ende der Tragfüße 5 sind zwei feststehende Rollen 7 angeordnet, die auf einer gedachten gemeinsamen Achse liegen.

Im Dachbereich ist eine am Wagen 2 angelenkte Deichsel 8 vorgesehen. Die Deichsel 8 wird am vorangehenden Wagen drehbar angeschlagen.

Die Länge der Deichsel 8 ist derart abgestimmt, daß nachfolgende Wagen spurtreu hintereinander herlaufen. Die Deichsel 8 kann dabei auch noch so abgestimmt werden, daß sie sich wenigstens annähernd gleich über die Fahrachse nach vorne und nach hinten erstreckt.

Durch die hochgelegte Deichsel 8 kann ohne Stolperfallen zwischen zwei benachbarten Wagen 2 hindurchgegangen werden.

Durch die feststehenden Rollen 7 kann auf - einem hohen Verschleiß unterliegende - Lenkrollen verzichtet werden, ohne die Spurtreue der aneinander gekoppelten Wagen negativ zu beeinflussen. Die mittige Anordnung der Rollen 7 in Bezug auf die Deichsel 8 sorgt für geringe Kräfte auf der Deichsel 8.

An den Füßen 5 und 6 kann eine Hubeinrichtung 9 vorgesehen sein. Diese Hubeinrichtung dient dazu die zu transporierenden Paletten 3 für den Transport anzuheben. Dafür sind an den Füßen 5 und 6 Aufnahmewinkel 10 angeordnet, die in der Höhe verstellbar sind. Über einen zentralen Antrieb 11 werden diese Aufnahmewinkel 10 mittels einer Seilkopplung 12 gemeinsam in der Höhe verstellt. Zum Anheben von Paletten 3 sind die Aufnahmewinkel 10 zunächst abgesenkt. Dann wird die Palette in den Wagen 2 hineingeschoben. Daraufhin werden die Aufnahmewinkel 10 angehoben und damit auch die Palette 3.

Die Hubeinrichtung 9 kann dabei über einen nicht näher dargestellten elektrischen, pneumatischen oder hydraulischen Antrieb verfügen. Die Versorgung des Antriebes kann dabei zentral von einem nicht dargestellten Zugfahrzeug erfolgen oder aber auch autark für jeden einzelnen Wagen 2 ausgeführt sein. In diesem Fall können beispielsweise Akkumulatoren vorgesehen sein. Diese können beispielsweise auch zentral aufgeladen werden.

Der Antrieb kann zentral wirken oder aber auf die einzelnen Aufnahmewinkel 10.

Die Paletten 3 können auf Laufrollen 13 gelagert sein, die ein leichtes Einführen und herausnehmen der Paletten aus den Wagen 2 ermöglichen.

Zur Ankopplung der einzelnen Wagen 2 aneinander ist eine Kupplung 14 vorgesehen, die hintereinander die einzelnen Drehachsen 15, 16 und 17 aufweist. Die Drehachsen 15, 16 und 17 sind dabei als Achsen ausgeführt. Durch diese Ausführung kann die Kupplung die auftretenden Kräfte sehr gut aufnehmen. Die nötige Bewegungsfreiheit der Kupplung 14 ist auch unter Last sichergestellt. Zur Trennung der Kupplung 14 ist es denkbar, daß eine der Drehachsen 15, 16 oder 17 öffenbar ausgebildet ist. Es ist aber auch denkbar, daß zusätzlich zu den einzelnen Drehachsen 15, 16 und 17 eine weitere, nicht dargestellte Trenneinrichtung vorgesehen ist und die eigentliche Kupplung 14 entweder an der Deichsel 8 oder am nächsten Wagen 2 verbleibt.

Es ist aber auch denkbar, daß jedwede, 3 Freiheitsgrade aufweisende Kupplungseinrichtung eingesetzt wird.

Das vorbeschriebene System 1 ist dazu geeignet Paletten 3 seitlich aufzunehmen oder aber auch in Fahrtrichtung.

Das System ist vor allem zum Transport von Gegenständen innerhalb von Fabrikhallen oder dergleichen vorgesehen.

An den Hilfsfüßen 5 können nicht dargestellte, auch drehbar gelagerte Hilfsrollen vorgesehen sein, die ein leichtes Umeinanderschieben abgekoppelter und nicht beladener Wagen ermöglicht. Diese Hilfsrollen werden beim Ankoppeln vom Boden abgehoben.

## Patentansprüche

1. System zum Transportieren von Gegenständen, insbesondere von Paletten oder dergleichen,wobei das System aus einem oder mehreren Transportwagen aufgebaut ist und diese zur Aufnahme der Gegenstände vorgesehen sind, wobei die Transportwagen mit starren Deichseln aneinander gekoppelt sind, **dadurch gekennzeichnet, daß** die Deichsel im jeweils nächsten Wagen in einer Kupplung wenigstens in einer Ebene, in zwei oder drei Ebenen drehbar gelagert ist, und daß die Transportwagen jeweils zwei starre Räder aufweisen, die auf einer zumindest gedachten Achse angeordnet sind.

2. System nach Anspruch 1, **dadurch gekennzeichnet, daß** die Transportwagen einen selbsttragenden Rahmen aufweisen

3. System nach Anspruch 1 oder 2, **dadurch gekennzeichnet, daß** die Transportwagen wenigstens zwei Füße aufweisen, die an den unteren Enden Räder aufweisen.

4. System nach Anspruch 1, 2 oder 3, **dadurch gekennzeichnet daß** die Transportwagen vier Füße aufweisen.

5. System nach einem der vorangehenden Ansprüche, **dadurch gekennzeichnet, daß** die Radachse mittig zwischen den beiden zumindest gedachten Endpunkten der Deichsel angeordnet ist.

6. System nach einem der vorangehenden Ansprüche, **dadurch gekennzeichnet, daß** die Deichsel zur Aufnahme von Kippkräften ausgebildet ist.

7. System nach einem der vorangehenden Ansprüche, **dadurch gekennzeichnet, daß** die Deichseln am oberen Ende der Wagen angeordnet sind.

8. System nach Anspruch 7, **dadurch gekennzeichnet, daß** die Füße eine so große Länge aufweisen, daß der selbsttragende Rahmen und die daran die daran angebrachteDeichsel in Überkopfhöhe angeordnet sind.

9. System nach einem der vorangehenden Ansprüche, **dadurch gekennzeichnet, daß** die Transportwagen eine Hubeinrichtung für die zu transportierenden Gegenstände bzw. Paletten aufweisen.

10. System nach einem der vorangehenden Ansprüche, **dadurch gekennzeichnet, daß** die Gegenstände jeweils auf einem Fahrgestell gelagert werden.

11. System nach einem der vorangehenden Ansprüche, **dadurch gekennzeichnet, daß** die Kupplung für jeder Bewegungsebene jeweils eine separte Drehachse aufweist.

12. System nach einem der vorangehenden Ansprüche, **dadurch gekennzeichnet, daß** die Kupplung lösbar ausgebildet ist.

13. System nach Anspruch 12, **dadurch gekennzeichnet, daß** die Kupplung an einer Drehachse lösbar ausgebildet ist.

14. System nach einem der vorangehenden Ansprüche, **dadurch gekennzeichnet, daß** ein Zugfahrzeug für das System vorgesehen ist.
